# EUROPEAN PATENT SPECIFICATION

(11) **EP 2 302 725 B1**
(45) Date of publication and mention of the grant of the patent: **31.07.2013**
(21) Application number: 10250076.6
(22) Date of filing: 18.01.2010
(51) Int. Cl.: H01M 10/44, H01M 10/0525, H01M 4/505, H01M 4/525, H01M 4/36, H01M 6/16

(54) **Lithium battery containing a non-aqueous electrolyte and an additive**
Lithiumbatterie mit einem nichtwässrigen Elektrolyten und einem Additiv
Batterie au lithium contenant un electrolyte non aqueux et un additif

(30) Priority: 03.09.2009 US 239696 P; 16.10.2009 US 580995
(43) Date of publication of application: 30.03.2011
(73) Proprietor: Samsung SDI Co., Ltd., Gyeonggi-do (KR)
(72) Inventor: Kim, Jin-Sung, Yongin-si, Gyeonggi-do (KR); Oh, Mi-Hyeun, Yongin-si, Gyeonggi-do (KR); Lim, Jin-Hyuk, Yongin-si, Gyeonggi-do (KR); Han, Su-Hee, Yongin-si, Gyeonggi-do (KR); Park, Na-Rae, Yongin-si, Gyeonggi-do (KR)
(74) Representative: Mounteney, Simon James

(56) References cited:
- EP-A1- 2 108 640
- US-A1- 2008 102 369
- US-A1- 2008 152 998

## Description

### Technical Field of the Invention

The present invention relates to a lithium battery in which the positive electrode active material comprises a material comprising nickel (Ni), cobalt (Co), and manganese (Mn). The present invention also relates to a method of charging the lithium battery.

### Backaround of the Invention

Recently, as electronic devices have increased in performance, the batteries used in such high performance devices have been required to have increasingly high capacity and output power. In order to manufacture a battery having high rapacity, an active material having high capacity and/or a high charging voltage of the battery is used. However, since charging a battery to a high voltage increases side reactions between the electrodes and the electrolytic solution, the lifetime and high-temperature stability of the battery may be reduced.

It is an object of the present invention to provide a lithium battery that has high capacity, a long lifetime, and excellent stability at high temperature. It is a further object of the present invention to provide a method of charging the lithium battery.

### Summary of the Invention

The present invention provides a lithium battery according to Claim 1 of the appended set of claim. Preferred features of the lithium battery are set out in the claims that are dependent on Claim 1. The present invention also provides a method of charging the lithium battery, as claimed in Claim 13.

According to one aspect, the present invention provides a lithium battery comprising:
a positive electrode comprising a positive electrode active material;
a negative electrode comprising a negative electrode active material; and
an electrolytic solution;
wherein the positive electrode active material comprises a material represented by Formula 1 below:

   Liₓ(NiₚCo_{q}Mnᵣ)O_{y} (Formula 1)
wherein 0.97≤x≤1.03, p is 0.5, q is 0.2, r is 0.3, and y is 2; and
wherein the electrolytic solution comprises a non-aqueous organic solvent, a lithium salt, and adiponitrile.

In a preferred embodiment, the adiponitrile is present in the electrolytic solution in an amount of 10 parts by weight or less based on 100 parts by weight of the total amount of the non-aqueous organic solvent and the lithium salt. More preferably, the adiponitrile is present in the electrolytic solution in an amount of from 0.1 parts by weight to 10 parts by weight based on 100 parts by weight of the total amount of the non-aqueous organic solvent and the lithium salt. More preferably, the adiponitrile is present in the electrolytic solution in an amount of from 1 part by weight to 5 parts by weight based on 100 parts by weight of the total amount of the non-aqueous organic solvent and the lithium salt.

The positive electrode active material preferably comprises a material represented by Formula 1 below.

Liₓ(NiₚCo_{q}Mnᵣ)O_{y} (Formula 1)

wherein 0.95≤x≤1.05,0<p<1, 0<q<1, 0<r<1, p+q+r=1, and 0<y≤2- In a preferred embodiment, the positive electrode active material comprises LiNi_{0.5}Mn_{0.3}O₂

In a preferred embodiment the lithium salt comprises one or more selected from the group consisting of UPF₆, LiBF₄, LiSbF₆, LiAsF₆, LiN(SO₂C₂F₅)₂, Li(CF₃SO₂)_{z}N, LiC₄F₉SO₃, LiClO₄. LiAlO₂, LiAlCl₄, LiN(CₓF₂ₓ₊₁SO₂)(C_{y}F_{2y+1}SO₂) in which x and y are integers and may be the same or different, LiCl, Lil, LiB(C₂O₄)₂, and lithium *bis*(oxalato) borate (LiBOB).

In a preferred embodiment, the electrolytic solution further comprises an additive comprising one or more carbonate materials selected from the group consisting of vinylene carbonate (VC), fluoroethylene carbonate (FEC), and combinations thereof. In a preferred embodiment, the additive is present in an amount of from 0.1 parts by weight to 10 parts by weight based on 100 parts by weight of the total amount of the non-aqueous organic solvent and the lithium salt.

In a preferred embodiment, the non-aqueous organic solvent is selected from the group consisting of dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC) or mixtures thereof.

In an embodiment, the positive electrode comprises more than one positive electrode active material. In some embodiments, the positive electrode includes LiCoO₂ as a positive electrode active material.

According to a preferred embodiment, the battery has a final charge voltage of 4.25 V or more.

According to a further aspect, the present invention provides a method of charging a lithium battery. The method comprises providing a lithium battery according to any preceding claim and charging the lithium battery to a final charge voltage of 4.25 V or more.

The lithium battery according to the present invention has a long lifetime and excellent stability at high temperature, even when charged to a high voltage.

### Brief Description of the Drawings

FIG. 1 is a schematic perspective view of a lithium battery according to an embodiment of the present invention.
FIG. 2 shows lifetime characteristics at room temperature after 100 cycles according to Evaluation Example 1.
FIG. 3 shows lifetime characteristics at 45 °C after 300 cycles according to Evaluation Example 2.
FIG. 4 shows lifetime characteristics at 45 °C after 200 cycles according to Evaluation Example 3.

### Detailed Description

The lithium battery according to the present invention comprises a positive electrode comprising a positive electrode active material; a negative electrode comprising a negative electrode active material; and an electrolytic solution. The positive electrode active material comprises a material comprising nickel (Ni), cobalt (Co), and manganese (Mn) and the electrolytic solution comprises a non-aqueous organic solvent, a lithium salt, and adiponitrile (NC(CH₂)₄CN). The amount of adiponitrile in the electrolytic solution is preferably equal to or less than 10 parts by weight based on 100 parts by weight of the total amount of the non-aqueous organic solvent and the lithium salt.

The material comprising nickel, cobalt, and manganese is represented by Formula 1 below:

Liₓ(NiₚCo_{q}Mnᵣ)O_{y} (Formula 1)

wherein x, p, q, r, and y refer to a molar ratio of the elements.

In Formula 1, 0.97≤x≤1.03, p is 0.5, q is 0.2, r is 0.3, and y is 2,.

The Ni-Co-Mn-based active material may be represented by LiNi₀.₅Co_{0.2}Mn₀.₃O₂, but is not limited thereto.

Without wishing to be bound by theory, it is believed that the adiponitrile contained in the electrolytic solution prevents the lifetime performance and high-temperature stability of the lithium battery from being significantly reduced when the lithium battery is charged to a high voltage, and can even improve the lifetime performance and high-temperature stability of the lithium battery. Thus, the lithium battery according to the present invention has a high capacity, a long lifetime, and excellent stability at high temperature.

In order to achieve a high capacity in the case of a lithium battery including an Ni-Co-Mn-based positive electrode active material, a large amount of Li ions may be used by charging the lithium battery to a high voltage of equal to or greater than 4.25 V.

However, reactions between the Ni-Co-Mn-based active material and the electrolytic solution increase in such a high-voltage charging system, which deteriorates the lifetime performance and high-temperature stability of the lithium battery. However, in the case of the lithium battery according to the present invention, it is believed that reaction between adiponitrile and the surface of the Ni-Co-Mn-based active material stabilizes the structure of the positive electrode , and thus side reactions between the surface of the positive electrode and the electrolytic solution are inhibited. Thus, the lifetime performance and high-temperature stability of the lithium battery are not significantly reduced, and may even be improved, even when the lithium battery is charged to a high voltage.

The amount of adiponitrile present in the electrolytic solution may be equal to or less than 10 parts by weight, for example in the range of about 0.1 parts by weight to about 10 parts by weight based on 100 parts by weight of the total amount of the non-aqueous organic solvent and the lithium salt.

In some preferred embodiments, the amount of adiponitrile is in the range of about 0.1 parts by weight to about 5 parts by weight, for example, about 1 part by weight to about 5 parts by weight based on 100 parts by weight of the total amount of the non-aqueous organic solvent and the lithium salt , but is not limited thereto. For example, the amount of adiponitrile may be 1 part by weight, 2 parts by weight, 5 parts by weight, or 10 parts by weight based on 100 parts by weight of the total amount of the non-aqueous organic solvent and the lithium salt , but is not limited thereto.

The non-aqueous organic solvent contained in the electrolytic solution functions as a medium through which ions participating in the electrochemical reactions of the lithium battery can pass. The non-aqueous organic solvent may include a carbonate solvent, an ester solvent, an ether solvent, a ketone solvent, an alcohol solvent, or an aprotic solvent. The carbonate solvent may be dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), or the like, but is not limited thereto. The ester solvent may be methyl acetate, ethyl acetate, n-propyl acetate, dimethyl acetate, methyl propionate, ethyl propionate, γ-butyrolactone, decanolide, valerolactone, mevalonolactone, caprolactone, or the like, but is not limited thereto. The ether solvent may be dibutyl ether, tetraglyme, diglyme, dimethoxy ethane, 2-methyltetrahydrofuran, tetrahydrofuran, or the like, but is not limited thereto. The ketone solvent may be cyclohexanone, but is not limited thereto. The alcohol solvent may be ethyl alcohol, isopropyl alcohol, or the like, but is not limited thereto. The aprotic solvent may be a nitrile such as R-CN, wherein R is a C₂-C₂₀ linear, branched, or cyclic hydrocarbon-based moiety which may include a double-bonded aromatic ring or an ether bond, an amide such as dimethylformamide, a dioxolane such as 1,3-dioxolane, a sulfolane, or the like, but is not limited thereto.

The non-aqueous organic solvents may be used alone or in combinations of at least two. If used in combinations, the ratio of the non-aqueous organic solvents may vary according to the desired performance of the lithium battery, and this will be clear to those of ordinary skill in the art. For example, the non-aqueous organic solvent may be a mixture of ethylene carbonate (EC), ethylmethyl carbonate (EMC) and dimethyl carbonate (DMC) in a volume ratio of 1:1:1, but is not limited thereto.

The lithium salt contained in the electrolytic solution is dissolved in the non-aqueous organic solvent and functions as a source of lithium ions in the lithium battery, essentially to operate the lithium battery and accelerate the migration of lithium ions between the positive electrode and the negative electrode. The lithium salt may include at least one salt selected from the group consisting of LiPF₆, LiBF₄, LiSbF₆, LiAsF₆, LiN(SO₂C₂F₅)₂, Li(CF₃SO₂)₂N, LiC₄F₉SO₃, LiClO₄, LiAlO₂, LiAlCl₄, LiN(CₓF₂ₓ₋₁SO₂)(C_{y}F_{2y+1}SO₂), where x and y are respectively natural numbers, LiCl, Lil and LiB(C₂O₄)₂, and lithium bis(oxalato) borate (LiBOB).

The concentration of the lithium salt in the electrolytic solution may be in the range of about 0.1 M to about 2.0 M. For example, the concentration of the lithium salt may be in the range of about 0.6 M to about 2.0 M. If the concentration of the lithium salt is within the ranges described above, the electrolytic solution may have desired conductivity and viscosity, and thus lithium ions may be efficiently migrated. In some embodiments, the concentration of the lithium salt may also fall outside of the above preferred ranges, without departing from the scope of the present invention.

The electrolytic solution may further include an additive capable of improving the low temperature performance of the lithium battery and/or the swelling performance of the lithium battery at high temperature. The additive may be a carbonate material. For example, the carbonate material may be vinylene carbonate (VC); vinylene carbonate (VC) derivatives having at least one substituent selected from the group consisting of a halogen atom, such as -F, -Cl, -Br, and -I, a cyano group (CN), and a nitro group (NO₂); or ethylene carbonate (EC) derivatives having at least one substitutent selected from the group consisting of a halogen atom, such as -F, -Cl, -Br, and -I, a cyano group (CN), and a nitro group (NO₂), but is not limited thereto. The additives may be used alone or in combinations of at least two.

The electrolytic solution may further include an additive including at least one selected from the group consisting of vinylene carbonate (VC) and fluoroethylene carbonate (FEC). For example, the electrolytic solution may further include fluoroethylene carbonate as an additive. As a further example, the electrolytic solution may further include vinylene carbonate and fluoroethylene carbonate as additives.

The amount of the additive may be in the range of about 0.1 parts by weight to about 10 parts by weight based on 100 parts by weight of the total amount of the non-aqueous organic solvent and the lithium salt. If the amount of additive is within the range described above, not only the lifetime performance and high-temperature stability of the lithium battery may be substantially improved, but also the low temperature performance of the lithium battery and the swelling characteristics of the lithium battery at high temperature may be improved to a desired level, even when the lithium battery is charged to a high voltage, e.g., a voltage equal to or greater than 4.25 V. In some embodiments, the amount of the additive may also fall outside of the above preferred ranges, without departing from the scope of the present invention.

In a preferred embodiment, the amount of the additive is in the range of about 1 part by weight to about 5 parts by weight, based on 100 parts by weight of the total amount of the non-aqueous organic solvent and the lithium salt. In another preferred embodiment, the amount of the additive is in the range of about 3 parts by weight to about 4 parts by weight, based on 100 parts by weight of the total amount of the non-aqueous organic solvent and the lithium salt.

The type of the lithium battery is not limited, and may be, for example, a lithium secondary battery, such as a lithium ion battery, a lithium ion polymer battery, a lithium sulfur battery, or the like, or a lithium primary battery.

The positive electrode may include a current collector and a positive electrode active material layer formed on the current collector. The positive electrode may, for example, be prepared according to the following process. A positive electrode active material, a binder, and a solvent are mixed to prepare a positive electrode active material-containing composition. Then, the positive electrode active material-containing composition is directly coated onto a current collector, e.g., an aluminum (Al) current collector, and dried to prepare a positive electrode plate. Alternatively, the positive electrode active material-containing composition can be cast on a separate support and a film obtained therefrom can be laminated on the current collector to prepare a positive electrode plate. The method of manufacturing the positive electrode will be known to those of ordinary skill in the art, and thus a detailed description thereof will not be provided here. The solvent may be N-methylpyrrolidone, acetone, water, or the like, but is not limited thereto.

The positive electrode active material for forming the positive electrode active material layer includes the Ni-Co-Mn-based active material. The Ni-Co-Mn-based active material may be represented by Formula 1. For example, the Ni-Co-Mn-based active material may be represented by LiNi_{0.5}Co_{0.2}Mn_{0.3}O₂, but is not limited thereto.

The positive electrode active material may, in some embodiments, only include the Ni-Co-Mn-based active material. Alternatively, in other embodiments, it may include the Ni-Co-Mn-based active material and at least one first positive electrode active material.

A compound (lithiated intercalation compound) which allows reversible intercalation and deintercalation of lithium may be used as the first positive electrode active material. Examples of materials suitable for use as the first positive electrode active material include compounds represented by the following formulae, but are not limited thereto:
LiₐA_{1-b}X_{b}D₂ (where 0.95≤a≤1.1, and 0≤b≤0.5); LiₐE_{1-b}X_{b}O_{2-c}D_{c} (where 0.95≤a≤1.1. 0≤b≤0.5, and 0≤c≤0.05); LiE_{2-b}X_{b}O_{4-c}D_{c} (where 0≤b≤0.5 and 0≤c≤0.05); LiₐNi_{1-b-c}Co_{b}B_{c}Dₐ (where 0.95≤a≤1.1, 0≤b≤0.5, 0≤c≤0.05, and 0≤a≤2);
LiₐNi_{1-b-c}CO_{b}X_{c}O_{2-α}M_{α} (where 0.95≤a≤1.1, 0≤b≤0.5, 0≤c≤0.05, and 0<α<2); LiₐNi_{1-b-c}C_{Ob}X_{c}O₂₋ₐM₂ (where 0.95≤a≤1.1, 0≤b≤0.5, 0≤c≤0.05, and 0<α<2); LiₐNi_{1-b}-_{c}Mn_{b}X_{c}Dₐ (where 0.95≤a≤1.1, 0≤b≤0.5, 0≤c≤0.05, and 0<α≤2); LiₐNi_{1-b-c}Mn_{b}X_{c}O_{2-α}M_{α} (where 0.95≤a≤1.1, 0≤b≤0.5, 0≤c≤0.05, and 0<α<2); LiₐNi_{1-b-c}Mn_{b}X_{c}O₂₋ₐM₂ (where 0.95≤a≤1.1, 0≤b≤0.5, 0≤c≤0.05, and 0<α<2); LiₐNi_{b}E_{c}G_{d}O₂ (where 0.90≤a≤1.1, 0≤b≤0.9, 0≤c≤0.5, and 0.001≤d≤0.1); LiₐNi_{b}CO_{c}Mn_{d}GₑO_{z} (where 0.90≤a≤1.1, 0≤b≤0.9, 0≤c≤0.5, 0≤d≤0.5, and 0.001≤e≤0.1); LiₐNiG_{b}O₂ (where 0.90≤a≤1.1 and 0.001≤b≤0.1); LiₐCoG_{b}O₂ (where 0.90≤a≤1.1 and 0.001≤b≤0.1); LiₐMnG_{b}O₂ (where 0.90≤a≤1.1 and 0.001≤b≤0.1);
LiₐMn₂G_{b}O₄ (where 0.90≤a≤1.1 and 0.001≤b≤0.1); QO₂; QS₂; LiQS₂; V₂O₅; LiV₂O₅; LiZO₂; LiNiVO₄; Li_{(3-f)}J₂(PO₄)₃ (where 0≤f≤2); Li_{(3-f)}Fe₂(PO₄)₃ (where 0≤f≤2); and LiFePO₄.

In the above formulae, A is selected from the group consisting of nickel (Ni), cobalt (Co), manganese (Mn), and combinations thereof; X is selected from the group consisting of aluminum (Al), nickel (Ni), cobalt (Co), manganese (Mn), chromium (Cr), iron (Fe), magnesium (Mg), strontium (Sr), vanadium (V), a rare earth element, and combinations thereof; D is selected from the group consisting of oxygen (O), fluorine (F), sulfur (S), phosphorus (P), and combinations thereof; E is selected from the group consisting of cobalt (Co), manganese (Mn), and combinations thereof; M is selected from the group consisting of fluorine (F), sulfur (S), phosphorus (P), and combinations thereof; G is selected from the group consisting of aluminum (Al), chromium (Cr), manganese (Mn), iron (Fe), magnesium (Mg), lanthanum (La), cerium (Ce), strontium (Sr), vanadium (V), and combinations thereof; Q is selected from the group consisting of titanium (Ti), molybdenum (Mo), manganese (Mn), and combinations thereof; Z is selected from the group consisting of chromium (Cr), vanadium (V), iron (Fe), scandium (Sc), yttrium (Y), and combinations thereof; and J is selected from the group consisting of vanadium (V), chromium (Cr), manganese (Mn), cobalt (Co), nickel (Ni), copper (Co), and combinations thereof.

A surface coating layer may be formed on the above compounds. Alternatively, a mixture of the compounds without having a coating layer formed thereon and the compounds having a coating layer formed thereon, the compounds being selected from the above group, may be used. The coating layer may include at least one compound of a coating element selected from the group consisting of oxides, hydroxides, oxyhydroxides, oxycarbonates, and hydroxycarbonates of the coating element. The compounds for the coating layer may be amorphous or crystalline. The coating element contained in the coating layer may be magnesium (Mg), aluminium (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or mixtures thereof.

The coating layer may be formed using any method, for example, a spray coating method, a dipping method, or the like, which does not adversely affect the physical properties of the positive electrode active material when a compound of such a coating element is used. This will be clear to those of ordinary skill in the art, and thus a detailed description thereof will not be provided.

If the positive electrode active material is a mixture of the Ni-Co-Mn-based active material and the first positive electrode active material, the ratio of the Ni-Co-Mn-based active material and the first positive electrode active material may vary according to the desired performance of the lithium battery.

In some embodiments, the positive electrode active material contained in the positive electrode active material layer only includes the Ni-Co-Mn-based active material. In other embodiments, the positive electrode active material contained in the positive electrode active material layer includes the Ni-Co-Mn-based active material and the first positive electrode active material. In this regard, the first positive electrode active material may, for example, be LiCoO₂. For example, the Ni-Co-Mn-based active material and the first positive electrode active material may be mixed in a weight ratio of 3:7, but the ratio is not limited thereto.

The binder contained in the positive electrode active material layer functions to strongly bind positive electrode active material particles together and to the current collector. Examples of the binder include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, and a polymer having ethylene oxide, polyvinylpyrrolidone, polyurethane, polytetrafluoroethylene, polyvinylidene fluoride, polyethylene, polypropylene, styrene-butadiene rubber (SBR), acrylated SBR, epoxy resin, nylon, and the like.

The positive electrode active material layer may further include a conducting agent. The conducting agent is used to provide conductivity to the positive electrode. Any electrically-conductive material causing substantially no chemical change in batteries may be used. Examples of the conducting agent include carbonaceous materials, such as natural graphite, artificial graphite, carbon black, acetylene black, ketchen black, carbon fibers, and the like; metal-based materials, such as copper (Cu), nickel (Ni), aluminum (Al), silver (Ag), and the like, in powder or fiber form; and conductive materials, including conductive polymers, such as a polyphenylene derivative, and mixtures thereof.

The current collector may be aluminum (Al), but is not limited thereto.

Similarly, a negative electrode active material, a conducting agent, a binder and a solvent are mixed to prepare a negative electrode active material-containing composition. The negative electrode active material-containing composition is directly coated on a current collector, e.g., a Cu current collector, or is cast on a separate support and a negative electrode active material film obtained therefrom is laminated on a Cu current collector to obtain a negative electrode plate. In this regard, the amounts of the negative electrode active material, the conducting agent, the binder and the solvent are those commonly used in a lithium battery.

Natural graphite, a silicon/carbon complex (SiOₓ), silicon metal, silicon thin film, lithium metal, a lithium alloy, a carbonaceous material or graphite may be used as the negative electrode active material. The conducting agent, the binder and the solvent in the negative electrode active material-containing composition may be the same as those in the positive electrode active material-containing composition. If desired, a plasticizer may be added to the positive electrode active material-containing composition and the negative electrode active material-containing composition to produce pores inside the electrode plates.

A separator may be interposed between the positive electrode and the negative electrode according to the type of the lithium battery. Any separator that is commonly used for lithium batteries may be used. In one embodiment, the separator is a separator having low resistance to migration of ions in an electrolyte and having a high electrolyte-retaining ability. Examples of materials that can be used to form the separator include glass fiber, polyester, Teflon, polyethylene, polypropylene, polytetrafluoroethylene (PTFE), and combinations thereof, each of which may be a non-woven fabric or a woven fabric. A windable separator formed of a material such as polyethylene and polypropylene may be used for a lithium ion battery. A separator that may retain a large amount of an organic electrolytic solution may be used for a lithium ion polymer battery. These separators may be prepared according to the following process.

A polymer resin, a filler, and a solvent are mixed to prepare a separator composition. Then, the separator composition may be directly coated on an electrode, and then dried to form a separator film. Alternatively, the separator composition may be cast on a separate support and then dried to form a separator composition film, and the separator composition film exfoliated from the support may be laminated on an electrode to form a separator film.

The polymer resin may be any material that may be used as a binder for an electrode plate. Examples of the polymer resin include a vinylidenefluoride/hexafluoropropylene copolymer, polyvinylidenefluoride, polyacrylonitrile, polymethylmethacrylate and mixtures thereof, but are not limited thereto. For example, a vinylidenefluoride/hexafluoropropylene copolymer having about 8 to about 25 wt% of hexafluoropropylene may be used.

The separator may be interposed between the positive electrode plate and the negative electrode plate to form a battery assembly. The battery assembly is wound or folded and then sealed in a cylindrical or rectangular battery case. Then, an organic electrolyte solution is injected into the battery case to complete the manufacture of a lithium ion battery. Alternatively, a plurality of electrode assemblies may be stacked in a bi-cell structure and impregnated with an organic electrolyte solution according to an embodiment of the present invention. The resultant is put into a pouch and sealed, thereby completing the manufacture of a lithium ion polymer battery.

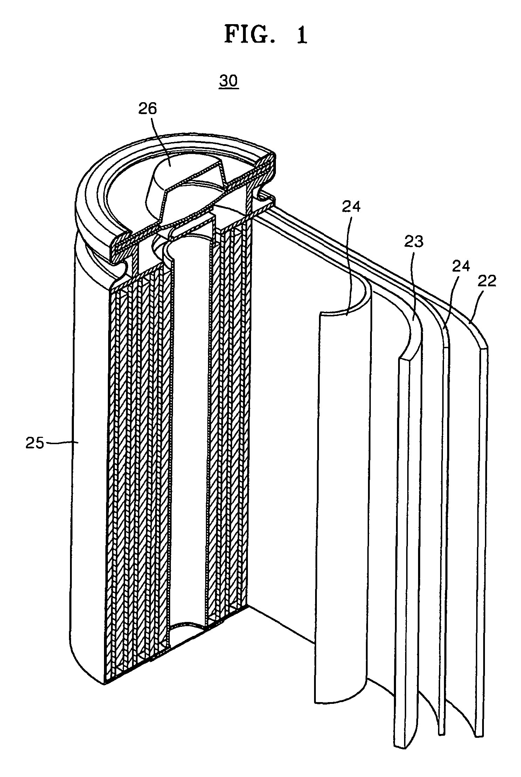

FIG. 1 is a schematic perspective view of a lithium battery according to an embodiment of the present invention. Referring to FIG. 1, a lithium battery 30 according to the present embodiment includes a positive electrode 23, a negative electrode 22 and a separator 24 interposed between the positive electrode 23 and the negative electrode 22, and an electrolyte (not shown) impregnated into the positive electrode 23, the negative electrode 22 and the separator 24, a battery case 25, and a sealing member 26 sealing the case 25. The lithium battery 30 is manufactured by sequentially stacking the positive electrode 23, the negative electrode 22 and the separator 24 upon one another, winding the stack in a spiral form, and inserting the wound stack into the battery case 25.

The existence and the amount of a target element contained in the electrolytic solution of the lithium battery to be analyzed, e.g., adiponitrile, may be measured by gas chromatography (GC). In this regard, quantitative analysis of the target element may be performed using an internal standard method (ISTD) or an external standard method (ESTD).

According to the ISTD, the quantitative analysis may be performed using ethyl acetate (EA) as an internal standard. Meanwhile, according to the ESTD, the quantitative analysis may be performed using at least two standards per concentration for the target element to be analyzed, e.g., adiponitrile.

The method of quantitatively analyzing the target element, e.g., adiponitrile, contained in the electrolytic solution of the lithium battery may include: extracting the electrolytic solution from the lithium battery; performing GC of the extracted electrolytic solution using ISTD and/or ESTD, and collecting data of the target element; and calculating the amount (% by weight or % by volume) of the target element from the data, but is not limited thereto.

Details of the GC are disclosed in Principles of Instrumental Analysis, fifth edition, Douglas A. Skoog, et al., pp. 701-722.

Since the lithium battery according to the present embodiment includes the Ni-Co-Mn-based active material-containing positive electrode and the electrolytic solution containing adiponitrile, the lifetime and high-temperature stability may be improved even when the lithium battery is charged to a high voltage, e.g. 4.25 V or greater. The lifetime and high-temperature stability may also be improved when the lithium battery is charged to a voltage of 4.3 V or greater. The lifetime and high-temperature stability may also be improved when the lithium battery is charged to a voltage of 4.4 V or greater. Thus, the lithium battery may have high capacity, long lifetime, and excellent high-temperature stability.

Thus, the final charge voltage of the lithium battery may be equal to or greater than 4.25 V. The final charge voltage of the lithium battery may also be equal to or greater than 4.3 V. The final charge voltage of the lithium battery may also be equal to or greater than 4.4 V.

A method of charging a lithium battery according to a further aspect of the present invention includes: providing a lithium battery according to the present invention; and charging the lithium battery to a final charge voltage of 4.25 V or more.

According to the method of charging the lithium battery, the lithium battery may have long lifetime and excellent high-temperature stability, even though the lithium battery is charged to have a final charge voltage of 4.25 V or greater. Thus, a lithium battery having a high capacity may be obtained by charging a lithium battery according to the present invention to a high voltage of 4.25 V or greater.

The lithium battery according to the present invention can be used in various electronic devices, particularly high performance electronic devices and/or portable electronic devices. Non-limiting examples of electronic devices for which the lithium battery according to the present invention is particularly suitable are laptop computers, mobile telephones, personal digital assistants (PDAs), and the like.

Hereinafter, one or more embodiments of the present invention will be described in detail with reference to the following non-limiting examples.

### Examples

### Example 1

Natural graphite and polyvinylidene fluoride (PVDF), as a binder, were mixed in a weight ratio of 96:4 in N-methylpyrrolidone, as a solvent, to prepare a negative electrode slurry. The negative electrode slurry was coated on a copper (Cu)-foil to a thickness of 14µm to have a thin plate, dried at 135°C for 3 hours or more, and pressed to prepare a negative electrode.

LiNi_{0.5}Co_{0.2}Mn_{0.3}O₂, as a positive electrode active material, PVDF, as a binder, and carbon conductor, as a conducting agent were dispersed in a weight ratio of 96:2:2 in N-methylpyrrolidone, as a solvent, to prepare positive electrode slurry. The positive electrode slurry was coated on a thin Al film to a thickness of 60 µm to prepare a thin plate, dried at 135°C for 3 hours or more, and pressed to prepare a positive electrode.

Fluoroethylene carbonate (FEC), adiponitrile and 1.3 M LiPF₆ were added to a solvent prepared by mixing ethylene carbonate (EC), ethylmethyl carbonate (EMC), and dimethyl carbonate (DMC) in a volume ratio of 1:1:1 to prepare an electrolytic solution. Here, the amount of fluoroethylene carbonate was 3 parts by weight based on 100 parts by weight of the total amount of the non-aqueous organic solvent and the lithium salt , and the amount of adiponitrile was 1 part by weight based on 100 parts by weight of the total amount of the non-aqueous organic solvent and the lithium salt.

The negative electrode and the positive electrode were wound using a porous polyethylene (PE) film, as a separator, and pressed into a battery case. Then, the electrolytic solution was injected into the battery case to prepare a lithium battery having a capacity of 2600 mAh.

### Example 2

A lithium battery was prepared in the same manner as in Example 1, except that the amount of adiponitrile was 2 parts by weight based on 100 parts by weight of the total amount of the non-aqueous organic solvent and the lithium salt.

### Comparative Example 1

A lithium battery was prepared in the same manner as in Example 1, except that adiponitrile was not used.

### Comparative Example 2

A lithium battery was prepared in the same manner as in Example 1, except that succinonitrile was used instead of adiponitrile, wherein the amount of succinonitrile was 2 parts by weight based on 100 parts by weight of the total amount of the non-aqueous organic solvent and the lithium salt.

### Evaluation Example 1: Evaluation of Lifetime and High-temperature Stability

The lithium batteries prepared according to Examples 1 and 2 and Comparative Examples 1 and 2 were charged with 520 mA and 4.3 V, in a Constant Current (CC)/Constant Voltage (CV) mode at room temperature. When the batteries had a current amount of 20 mA, they were discharged at up to 2.75 V, for 520 mA in a CC mode. The lithium batteries were subjected to a formation process by repeating the charging and discharging 3 times.

### Evaluation of Lifetime

The lithium batteries subjected to the formation process according to Examples 1 and 2 and Comparative Examples 1 and 2 were charged with 2080 mA and 4.3 V, in a CC/CV mode. When the batteries had a current amount of 100 mA, they were discharged at up to 3 V, for 2600 mA in a CC mode at room temperature (about 25°C). Then, initial capacity thereof was measured. After 100 cycles of the charging and discharging of each of the lithium batteries were performed, capacity was measured. Based thereon, the capacity retention ((capacity after 100 cycles/initial capacity) x 100)(%) was calculated to evaluate lifetime characteristics at room temperature after 100 cycles.

Meanwhile, lifetime characteristics of the lithium batteries at 45°C after 300 cycles were evaluated in the same manner as described above performed at room temperature, except that the temperature was changed from room temperature to 45°C and the number of cycles was changed from 100 times to 300 times.

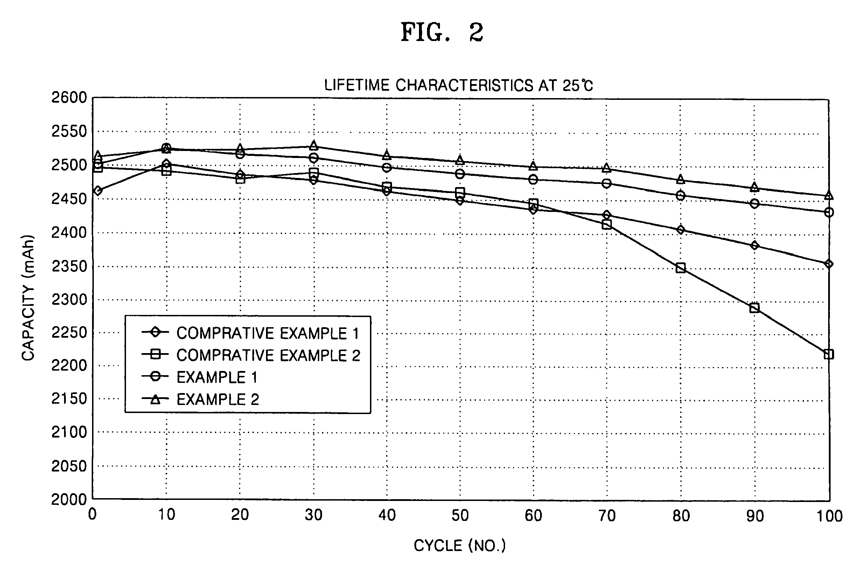

The results of evaluation of lifetime are shown in Table 1 below. Meanwhile, lifetime characteristics at room temperature after 100 cycles are shown in FIG. 2.

### Evaluation of High-temperature Stability

The lithium batteries subjected to the formation process according to Examples 1 and 2 and Comparative Examples 1 and 2 were charged with 1300 mA and 4.3 V, in a CC/CV mode at room temperature (about 25°C), when the batteries had a current amount of 100 mA, they were discharged at up to 2.75 V, for 520 mA in a CC mode. Then, initial capacity thereof was measured. Then, each of the lithium batteries was charged with 1300 mA and 4.3 V, in a CC/CV mode. When the cells had a current amount of 100 mA, they were left at 60°C for 30 days, and then discharged at up to 2.75 V, for 520 mA to measure open circuit voltage (OCV) and capacity after being left at 60°C for 30 days at 1000 khz. Accordingly, capacity retention after being left at 60°C for 30 days ((capacity after being left at 60°C for 30 days/initial capacity)x100)(%) was calculated.

The results of evaluation of high-temperature stability are shown in Table 1 below.

**Table 1**

| | Additive | Adiponitrile | Room temperature -lifetime (100 cycle) (%) | 45°C- lifetime (300 cycle) (%) | 60°C- OCV after 30 days (mV) | 60°C- capacity retention after 30 days (%) |
|---|---|---|---|---|---|---|
| Comparative Example 1 | FEC (3 parts by weight) | - | 95.7 | - | 4022 | 74.0 |
| Comparative Example 2 | FEC (3 parts by weight) | succinonitrile (2 parts by weight) | 89.0 | - | 4153 | 88.3 |
| Example 1 | FEC (3 parts by weight) | adiponitrile (1 part by weight) | 97.3 | 88.8 | 4154 | 88.8 |
| Example 2 | FEC (3 parts by weight) | adiponitrile (2 parts by weight) | 97.8 | 88.5 | 4154 | 89.2 |

Referring to Table 1 and FIG. 2, it was identified that the lithium batteries prepared according to Examples 1 and 2 have better lifetime performance and high-temperature stability than lithium batteries prepared according to Comparative Examples 1 and 2 when the lithium batteries are charged with a high voltage of 4.3 V.

### Comparative Example 3

A lithium battery was prepared in the same manner as in Comparative Example 1, except that 2 parts by weight of vinylene carbonate (VC) based on 100 pars by weight of the electrolytic solution and 2 parts by weight of FEC based on 100 parts by weight of the total amount of the non-aqueous organic solvent and the lithium salt were used as additives instead of 3 parts by weight of FEC.

### Comparative Example 4

A lithium battery was prepared in the same manner as in Comparative Example 2, except that 2 parts by weight of VC based on 100 pars by weight of the electrolytic solution and 2 parts by weight of FEC based on 100 parts by weight of the total amount of the non-aqueous organic solvent and the lithium salt were used as additives instead of 3 parts by weight of FEC.

### Example 3

A lithium battery was prepared in the same manner as in Example 1, except that 2 parts by weight of VC based on 100 pars by weight of the electrolytic solution and 2 parts by weight of FEC based on 100 parts by weight of the total amount of the non-aqueous organic solvent and the lithium salt were used as additives instead of 3 parts by weight of FEC.

### Example 4

A lithium battery was prepared in the same manner as in Example 2, except that 2 parts by weight of VC based on 100 pars by weight of the electrolytic solution and 2 parts by weight of FEC based on 100 parts by weight of the total amount of the non-aqueous organic solvent and the lithium salt were used as additives instead of 3 parts by weight of FEC.

### Example 5

A lithium battery was prepared in the same manner as in Example 4, except that 5 parts by weight of adiponitrile based on 100 parts by weight of the total amount of the non-aqueous organic solvent and the lithium salt was used instead of 2 parts by weight of adiponitrile.

### Example 6

A lithium battery was prepared in the same manner as in Example 4, except that 10 parts by weight of adiponitrile based on 100 parts by weight of the total amount of the non-aqueous organic solvent and the lithium salt was used instead of 2 parts by weight of adiponitrile.

### Evaluation Example 2: Evaluation of Lifetime

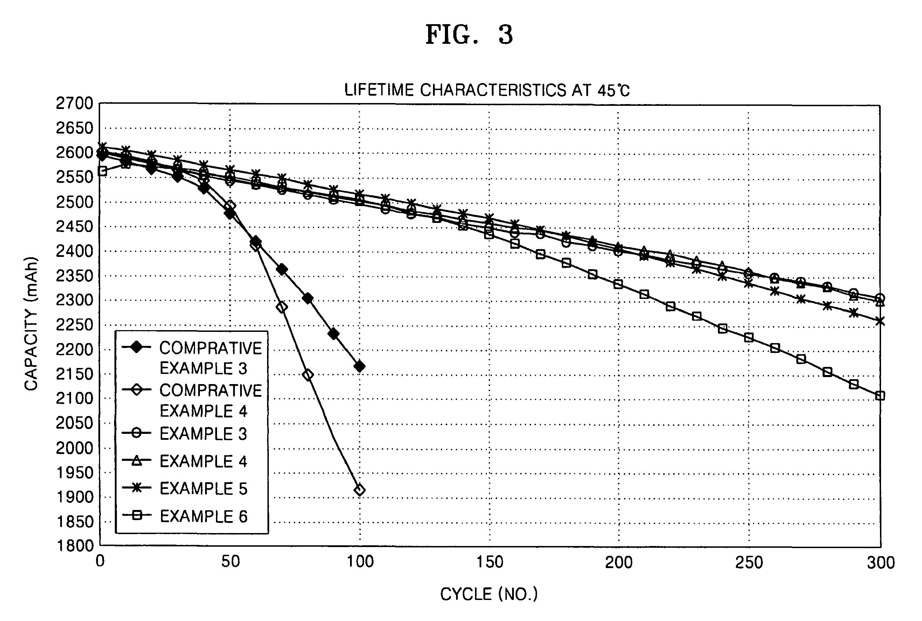

Lifetime performance of the lithium batteries prepared according to Comparative Examples 3 to 4 and Examples 3 to 6 were evaluated at 45°C after 300 cycles using the same manner as in Evaluation Example 1. The results are shown in Table 2 and FIG. 3.

**Table 2**

| | Additive | Adiponitrile | 45°C-lifetime (300 cycles) (%) |
|---|---|---|---|
| Comparative Example 3 | VC (2 parts by weight) FEC (2 parts by weight) | - | - |
| Comparative Example 4 | VC (2 parts by weight) FEC (2 parts by weight) | succinonitrile (2 parts by weight) | - |
| Example 3 | VC (2 parts by weight) FEC (2 parts by weight) | adiponitrile (1 part by weight) | 88.8 |
| Example 4 | VC (2 parts by weight) FEC (2 parts by weight) | adiponitrile (2 parts by weight) | 88.5 |
| Example 5 | VC (2 parts by weight) FEC (2 parts by weight) | adiponitrile (5 parts by weight) | 86.7 |
| Example 6 | VC (2 parts by weight) FEC (2 parts by weight) | adiponitrile (10 parts by weight) | 82.2 |

Referring to Table 2 and FIG. 3, it was identified that the lithium batteries prepared according to Examples 3 to 6 have better high-temperature stability than lithium batteries prepared according to Comparative Examples 3 to 4 when the lithium batteries are charged with a high voltage of 4.3 V.

### Comparative Example 6

A lithium battery was prepared in the same manner as in Comparative Example 3, except that a mixture of LiCoO₂ and LiNi₀.₅Co_{0.2}Mn_{0.3}O₂ (in a weight ratio of 7:3) was used instead of only using LiNi₀.₅Co_{0.2}Mn_{0.3}O₂ as the positive electrode active material.

### Comparative Example 7

A lithium battery was prepared in the same manner as in Comparative Example 4, except that a mixture of LiCoO₂ and LiNi₀.₅Co_{0.2}Mn_{0.3}O₂ (in a weight ratio of 7:3) was used instead of only using LiNi₀.₅Co_{0.2}Mn_{0.3}O₂ as the positive electrode active material.

### Example 7

A lithium battery was prepared in the same manner as in Example 3, except that a mixture of LiCoO₂ and LiNi₀.₅Co_{0.2}Mn_{0.3}O₂ (in a weight ratio of 7:3) was used instead of only using LiNi₀.₅Co_{0.2}Mn_{0.3}O₂ as the positive electrode active material.

### Example 8

A lithium battery was prepared in the same manner as in Example 4, except that a mixture of LiCoO₂ and LiNi₀.₅Co_{0.2}Mn_{0.3}O₂ (in a weight ratio of 7:3) was used instead of only using LiNi₀.₅Co_{0.2}Mn_{0.3}O₂ as the positive electrode active material.

### Example 9

A lithium battery was prepared in the same manner as in Example 5, except that a mixture of LiCoO₂ and LiNi₀.₅Co_{0.2}Mn_{0.3}O₂ (in a weight ratio of 7:3) was used instead of only using LiNi₀.₅Co_{0.2}Mn_{0.3}O₂ as the positive electrode active material.

### Evaluation Example 3

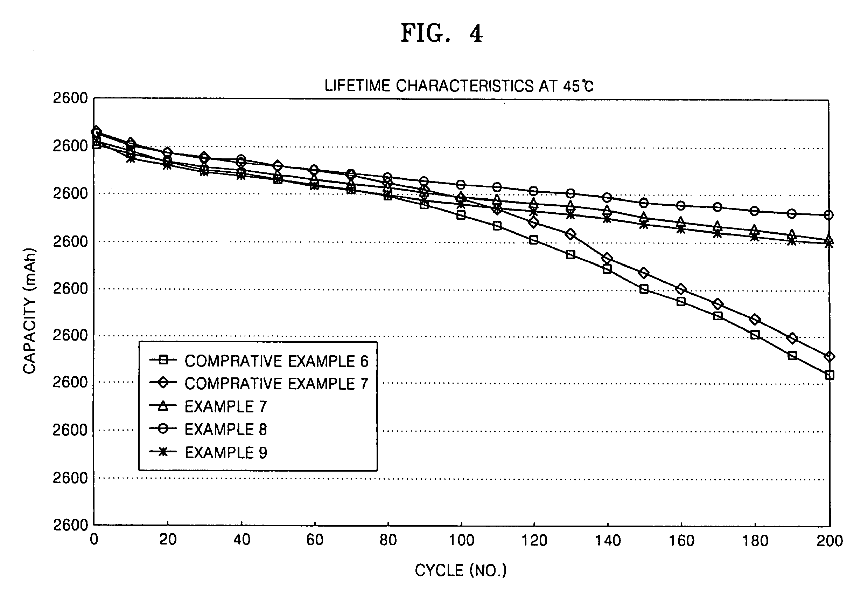

Lifetime performance of lithium batteries prepared according to Comparative Examples 6 and 7 and Examples 7 to 9 were performed in the same manner as in Evaluation Example 1, except that 200 cycles of charging and discharging were conducted at 45°C instead of 300 cycles. The results are shown in Table 3 and FIG. 4.

**Table 3**

| | Additive | Adiponitrile | 45°C-lifetime (200 cycle) (%) |
|---|---|---|---|
| Comparative Example 6 | VC (2 parts by weight) FEC (2 parts by weight) | - | 81.9 |
| Comparative Example 7 | VC (2 parts by weight) FEC (2 parts by weight) | succinonitrile (2 parts by weight) | 82.8 |
| Example 7 | VC (2 parts by weight) FEC (2 parts by weight) | adiponitrile (1 part by weight) | 92.8 |
| Example 8 | VC (2 parts by weight) FEC (2 parts by weight) | adiponitrile (2 parts by weight) | 93.9 |
| Example 9 | VC(2 parts by weight) FEC (2 parts by weight) | adiponitrile (5 parts by weight) | 92.3 |

Referring to Table 3 and FIG. 4, it was identified that the lithium batteries prepared according to Examples 7 to 9 have better high-temperature stability than lithium batteries prepared according to Comparative Examples 6 and 7 when the lithium batteries are charged with a high voltage of 4.3 V.

### Comparative Example 8

A lithium battery was prepared in the same manner as in Comparative Example 3, except that LiCoO₂ was used instead of using LiNi₀.₅Co_{0.2}Mn_{0.3}O₂ as the positive electrode active material.

### Comparative Example 9

A lithium battery was prepared in the same manner as in Example 4, except that LiCoO₂ was used instead of using LiNi₀.₅Co_{0.2}Mn_{0.3}O₂ as the positive electrode active material.

### Evaluation Example 4: Evaluation of Current Interrupt Device (CID) Operation Time

Lithium batteries prepared according to Comparative Examples 8, 9, and 3 and Examples 4 and 5 were charged with 520 mA and 4.3 V in a CC/CV mode at room temperature. When the cells had a current amount of 20 mA, they were discharged at up to 2.75 V, for 520 mA in a CC mode. The batteries were subjected to a formation process by repeating the charging and the discharging 3 times.

The lithium batteries subjected to the formation process according to Comparative Examples 8, 9, and 3 and Examples 4 and 5 were charged with 1300 mA and 4.4 V in a CC/CV mode at room temperature. When the batteries had a current amount of 100 mA, they were left at 90°C. Then, current interrupt device (CID) operation time was measured. The CID is a device sensing the change of pressure, e.g., the increase in pressure, in a sealed device and blocking current when the pressure is greater than a desired level. Since the CID is obvious to those of ordinary skill in the art, a detailed description thereof will not be provided.

**Table 4**

| | Positive electrode active material | Additive | Adiponitrile | CID operation time |
|---|---|---|---|---|
| Comparative Example 8 | LiCoO₂ | VC (2 parts by weight) FEC (2 parts by weight) | - | After 1 hour |
| Comparative Example 9 | LiCoO₂ | VC (2 parts by weight) FEC (2 parts by weight) | adiponitrile (2 parts by weight) | After 2 hour |
| Comparative Example 3 | LiNi₀.₅Co_{0.2}Mn_{0.3}O₂ | VC (2 parts by weight) FEC (2 parts by weight) | - | After 12 hour |
| Example 4 | LiNi₀.₅Co_{0.2}Mn_{0.3}O₂ | VC (2 parts by weight) FEC (2 parts by weight) | adiponitrile (2 parts by weight) | After 26 hour |
| Example 5 | LiNi₀.₅Co_{0.2}Mno_{0.3}O₂ | VC (2 parts by weight) FEC (2 parts by weight) | adiponitrile (5 parts by weight) | After 30 hour |

Referring to Table 4, it was identified that the lithium batteries prepared according to Examples 4 and 5 have longer CID operation time than lithium batteries prepared according to Comparative Examples 8, 9 and 3 when charged with a high voltage of 4.4 V and left at 90°C. According to the results shown in Table 4, it was identified that gas generation caused by side reaction between the positive electrode and the electrolytic solution is substantially inhibited at 90°C in the lithium batteries prepared according to Examples 4 and 5 when compared with the lithium batteries prepared according to Comparative Examples 8, 9 and 3.

### Comparative Example 10

A lithium battery was prepared in the same manner as in Comparative Example 2, except that LiCoO₂ was used instead of using LiNi₀.₅Co_{0.2}Mn_{0.3}O₂ as the positive electrode active material.

### Comparative Example 11

A lithium battery was prepared in the same manner as in Comparative Example 2, except that glutaronitrile was used instead of using succinonitrile.

### Comparative Example 12

A lithium battery was prepared in the same manner as in Comparative Example 10, except that glutaronitrile was used instead of using succinonitrile.

### Evaluation Example 5: Evaluation of Current Interrupt Device (CID) Operation Time

CID Operation Time of lithium batteries prepared according to Comparative Examples 2, 10, 11, and 12 and Example 2 were performed in the same manner as in Evaluation Example 4. The results are shown in Table 5.

**Table 5**

| | Positive electrode active material | Additive | Adiponitrile | CID operation time |
|---|---|---|---|---|
| Comparative Example 2 | LiNi₀.₅Co_{0.2}Mn_{0.3}O₂ | FEC (3 parts by weight) | succinonitrile (2 parts by weight) | After 10 hour |
| Comparative Example 10 | LiCoO₂ | FEC (3 parts by weight) | succinonitrile (2 parts by weight) | After 2 hour |
| Example 2 | LiNi₀.₅Co_{0.2}Mn_{0.3}O₂ | FEC (3 parts by weight) | adiponitrile (2 parts by weight) | After 28 hour |
| Comparative Example 11 | LiNi₀.₅Co_{0.2}Mn_{0.3}O₂ | FEC (3 parts by weight) | glutaronitrile (2 parts by weight) | After 12 hour |
| Comparative Example 12 | LiCoO₂ | FEC (3 parts by weight) | glutaronitrile (2 parts by weight) | After 2 hour |

Referring to Table 5, since the CID Operation time of the lithium battery of the Comparative Example 2 is after 10 hours and the CID Operation time of the lithium battery of the Comparative Example 10 is after 2 hours, it was identified that the difference of the CID Operation time is slight, although LiNi₀.₅Co_{0.2}Mn_{0.3}O₂ or LiCoO₂ is used as a positive electrode material, when succinonitrile is used instead of adiponitrile.

Referring to Table 5, since the CID Operation time of the lithium battery of the Example 2 is after 28 hours and the CID Operation time of the lithium battery of the Comparative Example 11 is after 12 hours, it was identified that the CID Operation time of the lithium battery of the Example 2 is remarkably improved than the CID Operation time of the lithium battery of the Comparative Example 11.

Referring to Table 5, since the CID Operation time of the lithium battery of the Comparative Example 11 is after 12 hours and the CID Operation time of the lithium battery of the Comparative Example 12 is after 2 hours, it was identified that the difference of the CID Operation time is slight, although LiNi₀.₅Co_{0.2}Mn_{0.3}O₂ or LiCoO₂ is used as a positive electrode material, when glutaronitrile is used instead of adiponitrile.

It should be understood that the embodiments described herein should be considered in a descriptive sense only and not for purposes of limitation. Descriptions of features within each embodiment should typically be considered as available for other similar features in other embodiments.

## Claims

1. A lithium battery comprising:
a positive electrode comprising a positive electrode active material;
a negative electrode comprising a negative electrode active material and
an electrolytic solution:
wherein the positive electrode active material comprises a material represented by Formula 1 below,
Liₓ(NiₚCo_{q}Mᵣ)O_{y} (Formula 1)
wherein 0.97≤x≤1.03, p is 0.5, q is 0.2, r is 0.3, and y is 2; and
wherein the electrolytic solution comprises a non-aqueous organic solvent, a lithium salt, and adipanitrile,

2. A lithium battery according to Claim 1, wherein the adiponitrile is present in the electrolytic solution in an amount of 10 parts by weight or less based on 100 parts by weight of the total amount of the non-aqueous organic solvent and the lithium salt,

3. A lithium battery according to Claim 2, wherein the adiponitrile is present in the electrolytic solution in an amount of from 0.1 parts by weight to 10 parts by weight based on 100 parts by weight of the total amount of the non-aqueous organic solvent and the lithium salt.

4. A lithium battery according to Claim 3, wherein the adiponitrile is present in the electrolytic solution in an amount of from 1 part by weight to 5 parts by weight based on 100 parts by weight of the total amount of the non-aqueous organic solvent. and the lithium salt.

5. A lithium battery according to any preceding claim, wherein the positive electrode active material comprises LiNi_{0.5}Co_{0.2}Mn_{0.3}O₂.

6. A lithium battery according to any preceding claim, wherein the lithium salt comprises one or more selected from the group consisting of LiPF₆, LiBF₄, LiSbF_{B}, LiAsF₆, LiN(SO₂C₂F₅)₂, Li(CF₃SO₂)₂N, LiC₄F₂SO₃, LiClO₄, LiAIO₂, LiAlCl₄, LiN(CₓF₂ₓ₊₁SO₂)(C_{y}F_{2y+1}SO₂) in which x and y are integers and may be the same or different, LiCl, Lil, LtB(C₂O₄)₂, and lithium *bis*(oxalato) borate (LiBOB)

7. A lithium battery according to any preceding claim, wherein the electrolytic solution further comprises an additive comprising one or more carbonate matenals selected from the group consisting of vinylene carbonate (VC), fluoroethylene carbonate (FEC), and combinations thereof.

8. A lithium battery according to Claim 7, wherein the additive is present in an amount of from 0 1 parts by weight to 10 parts by weight based on 100 parts by weight of the total amount of the non-aqueous organic solvent and the lithium salt.

9. A lithium battery according to any preceding claim wherein the non-aqueous organic solvent is selected from the group consisting of dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC) or mixtures thereof

10. A lithium battery according to any preceding claim, wherein the positive electrode comprises more than one positive electrode active material

11. A lithium battery according to Claim 10, wherein the positive electrode includes LiCoO₂ as a positive electrode active material

12. A lithium battery according to any preceding claim, wherein the battery has a final charge voltage of 4.25 V or more.

13. A method of charging a lithium battery composing:
providing a lithium battery according to any preceding claim; and
charging the lithium battery to a final charge voltage of 4 25 V or more.

## Patentansprüche

1. Lithiumbatterie umfassend:
eine positive Elektrode umfassend ein positives aktives Elektrodenmaterial;
ein negative Elektrode umfassend ein negatives aktives Elektrodenmaterial; und
eine Elektrolytlösung;
wobei das positive aktive Elektrodenmaterial ein Material umfasst, das durch die Formel 1 unten dargestellt ist:
Liₓ(NiₚCO_{q}Mnᵣ)O_{y} (Formel 1)
wobei 0,97≤x≤1,03 ist, p 0,5 beträgt, q 0,2 beträgt, r 0,3 beträgt und y 2 beträgt; und
wobei die Elektrolytlösung ein nichtwässriges organisches Lösungsmittel, ein Lithiumsalz und Adiponitril umfasst.

2. Lithiumbatterie nach Anspruch 1, wobei das Adiponitril in der Elektrolytlösung in einer Menge von 10 Gewichtsteilen oder weniger, auf 100 Gewichtsteile der Gesamtmenge des nichtwässrigen organischen Lösungsmittels und des Lithiumsalzes bezogen, vorliegt.

3. Lithiumbatterie nach Anspruch 2, wobei das Adiponitril in der Elektrolytlösung in einer Menge von 0,1 Gewichtsteilen bis 10 Gewichtsteilen, auf 100 Gewichtsteile der Gesamtmenge des nichtwässrigen organischen Lösungsmittels und des Lithiumsalzes bezogen, vorliegt.

4. Lithiumbatterie nach Anspruch 3, wobei das Adiponitril in der Elektrolytlösung in einer Menge von 1 Gewichtsteil bis 5 Gewichtstellen, auf 100 Gewichtsteile der Gesamtmenge des nichtwässrigen organischen Lösungsmittels und des Lithiumsalzes bezogen, vorliegt.

5. Lithiumbatterie nach einem der vorhergehenden Ansprüche, wobei das positive aktive Elektrodenmaterial LiNi₀,₅Co₀,₂Mn₀,₃O₂ umfasst,

6. Lithiumbatterie nach einem der vorhergehenden Ansprüche, wobei das Lithiumsalz eines oder mehrere ausgewählt aus der Gruppe bestehend aus LiPF₆, LiBF₄, LiSbF₈, LiAsF₆, LiN(SO₂GF₅)₂, Li(CF₃SO₂)₂N, LiC₄F₉SO₃, LiClO₄, LiAlO₂, LiAlCl₄, LiN(CₓF₂ₓ₊₁SO₂)(C_{y}F₂ₓ₊₁SO₂) umfasst, wobei x und y ganze Zahlen sind und gleich oder verschieden, LiCl, Lil, LiB(C₂O₄)₂ und Lithiumbis(oxalat)borat (LiBOB) sein können.

7. Lithiumbatterie nach einem der vorhergehenden Ansprüche, wobei die Elektrolytlösung des Weiteren ein Zusatzmittel umfasst umfassend ein oder mehrere Carbonatmaterialien ausgewählt aus der Gruppe bestehend aus Vinylencarbonat (VC), Fluorethylencarbonat (FEC) und Kombinationen davon.

8. Lithiumbatterie nach Anspruch 7, wobei das Zusatzmittel in einer Menge von 0,1 Gewichtsteilen zu 10 Gewichtsteilen, auf 100 Gewichtsteile der Gesamtmenge des nichtwässrigen organischen Lösungsmittels und des Lithiumsalzes bezogen, vorliegt.

9. Lithiumbatterie nach einem der vorhergehenden Ansprüche, wobei das nichtwässrige organische Lösungsmittel aus der Gruppe ausgewählt ist bestehend aus Dimethylcarbonat (DMC), Diethylcarbonat (DEC), Dipropylcarbonat (DPC), Methylpropylcarbonat (MPC), Ethylpropylcarbonat (EPC), Ethylmethylcarbonat (EMC), Ethylencarbonat (EC), Propylencarbonat (PC), Butylencarbonat (BC) oder Mischungen davon.

10. Lithiumbatterie nach einem der vorhergehenden Ansprüche, wobei die positive Elektrode mehr als ein positives aktives Elektrodenmaterial umfasst.

11. Lithiumbatterie nach Anspruch 10, wobei die positive Elektrode LiCoO₂ als positives aktives Elektrodenmaterial umfasst.

12. Lithiumbatterie nach einem der vorhergehenden Ansprüche, wobei die Batterie eine Endladungsspannung von 4,25 V oder mehr aufweist.

13. Verfahren zum Aufladen einer Lithiumbatterie, umfassend:
das Bereitstellen einer Lithiumbatterie nach einem der vorhergehenden Ansprüche; und
das Aufladen der Lithiumbatterie auf eine Endladungsspannung von 4,25 V oder mehr.

## Revendications

1. Pile au lithium comprenant;
une électrode positive comprenant un matériau actif d'électrode positive;
une électrode négative comprenant un matériau actif d'électrode négative; et
une solution électrolytique;
dans laquelle le matériau actif d'électrode positive comprend un matériau représenté par la formule 1 ci-dessous;
Liₓ(NiₚCo_{q}Nnᵣ)O_{y} (Formule 1)
dans laquelle 0,97 ≤ x ≤ 1,03, p a la valeur de 0,5, q a la valeur de 0,2, r a la valeur de 0,3, et y a la valeur de 2, et
dans laquelle la solution électrolytique comprend un solvant organique non aqueux, un sel de lithium, et de l'adiponitrile.

2. Pile au lithium selon la revendication 1, dans laquelle l'adiponitrile est présent dans la solution électrolytique en une quantité de 10 parties en poids ou moins sur la base de 100 parties en poids de la quantité totale du solvant organique non aqueux et du sel de lithium.

3. Pile au lithium selon la revendication 2, dans laquelle l'adiponitrile est présent dans la solution électrolytique en une quantité de 0,1 partie en poids à 10 parties en poids sur la base de 100 parties en poids de la quantité totale du solvant organique non aqueux et du sel de lithium.

4. Pile au lithium selon la revendication 3, dans laquelle l'adiponitrile est présent dans la solution électrolytique en une quantité de 1 partie en poids à 5 parties en poids sur la base de 100 parties en poids de la quantité totale du solvant organique non aqueux et du sel de lithium,

5. Pile au lithium selon l'une quelconque des revendications précédentes, dans laquelle le matériau actif d'électrode positive comprend LiNi₀.₅Co₀,₂Mn_{0,3}O₂.

6. Pile au lithium selon l'une quelconque des revendications précédentes, dans laquelle le sel de lithium comprend un ou plusieurs élément(s) sélectionné(s) parmi le groupe constitué de LiPF₆, LiBF₄, LiSbF₆, LiAsF₆, LiN(SO₂C₂F₅)₂, Li(CF₃SO₂)₂N, LiC₄F₉SO₃, LiClO₄, LiAlO₂, LiAlCl₄, LiN(CₓF₂ₓ₊₁SO₂)(C_{y}F_{2y+1}SO₂) dans laquelle x et y sont des nombres entiers et peuvent être identiques ou différents, LiCl, Li, LiS(C₂O₄)₂, et du bis(oxalato) borate de lithium (LiBOB).

7. Pile au lithium selon l'une quelconque des revendications précédentes, dans laquelle la solution électrolytique comprend en outre un additif comprenant un ou plusieurs matériau(x) de type carbonate sélectionné(s) parmi le groupe constitué du carbonate de vinylène (VC), du carbonate de fluoroéthylene (FEC) et de leurs combinaisons.

8. Pile au lithium selon la revendication 7, dans laquelle l'additif est présent en une quantité de 0,1 partie en poids à 10 parties en poids sur la base de 100 parties en poids de la quantité totale du solvant organique non aqueux et du sel de lithium.

9. Pile au lithium selon l'une quelconque des revendications précédentes, dans laquelle le solvant organique non aqueux est sélectionné parmi le groupe constitué du carbonate de diméthyle (DMC), du carbonate de diéthyle (DEC), du carbonate de dipropyle (DPC), du carbonate de méthylpropyle (MPC), du carbonate d'éthylpropyle (EPC), du carbonate d'éthylméthyle (EMC), du carbonate d'éthylène (BC), du carbonate de propylène (PC), du carbonate de butylène (BC) ou de leurs mélanges.

10. Pile au lithium selon l'une quelconque des revendications précédentes, dans laquelle l'électrode positive comprend plus d'un matériau actif d'électrode positive.

11. Pile au lithium selon la revendication 10, dans laquelle l'électrode positive comprend LiCoO₂ comme matériau actif d'électrode positive.

12. Pile au lithium selon l'une quelconque des revendications précédentes, dans laquelle la pile a une tension de charge finale de 4,25 V ou plus.

13. Procédé de charge d'une pile au lithium comprenant:
la fourniture d'une pile au lithium selon l'une quelconque des revendications précédentes; et
la charge de la pile au lithium jusqu'à une tension de charge finale de 4,25 V ou plus,
